Europäisches Patentamt

European Patent Office

Office européen des brevets

(11) Veröffentlichungsnummer: **0 228 563**
B1

# (12) EUROPÄISCHE PATENTSCHRIFT

(45) Veröffentlichungstag der Patentschrift:
04.04.90

(21) Anmeldenummer: 86116206.3

(22) Anmeldetag: 22.11.86

(51) Int. Cl.⁴: **G01B 5/06**

(54) **Längenmessgerät.**

(30) Priorität: 17.12.85 DE 3544515

(43) Veröffentlichungstag der Anmeldung:
15.07.87 Patentblatt 87/29

(45) Bekanntmachung des Hinweises auf die Patenterteilung:
04.04.90 Patentblatt 90/14

(84) Benannte Vertragsstaaten:
AT BE CH DE ES FR GB GR IT LI LU NL SE

(56) Entgegenhaltungen:
BE-A- 441 190
CH-A- 278 632
DE-A- 1 946 052
DE-C- 369 503
GB-A- 143 615
GB-A- 2 066 471
US-A- 1 677 424
US-A- 2 910 779

(73) Patentinhaber: AIGNER, Georg, Thannenmais,
D-8386 Reisbach(DE)

(72) Erfinder: AIGNER, Georg, Thannenmais,
D-8386 Reisbach(DE)

(74) Vertreter: Gustorf, Gerhard, Dipl.-Ing., Patentanwalt
Dipl.-Ing. Gerhard Gustorf Bachstrasse 6 A,
D-8300 Landshut(DE)

## Beschreibung

Die Erfindung betrifft ein Gerät zum Messen von Längen mit einem Abstützfuß, von dem eine schräge Griffleiste absteht, die ein Lagergehäuse für einen Tastbolzen trägt, der rechtwinklig zu einer an der Unterseite des Abstützfußes ausgebildeten Anlageebene verschiebbar und mit einem Anzeigeinstrument verbunden ist.

Ein derartiges Meßinstrument ist aus der GB-Patentschrift 143 615 bekannt und dient zum Messen von Höhen und Tiefen. Zu diesem Zweck hat der Abstützfuß an jeder Seite ein Klemmorgan für die Aufnahme einer Mikrometerschraube mit zwei entgegengesetzt zueinander verlaufenden Meßskalen. Für die Tiefenmessung wird die Mikrometerschraube in das unmittelbar an den Abstützfuß anschließende Klemmorgan eingesetzt und in die Nullstellung gebracht, während es zur Höhenmessung umgesetzt werden muß, und zwar in das Klemmorgan, das am Ende der schrägen Griffleiste ausgebildet ist.

In der DE-A 1 946 052 ist ein Meßgerät beschrieben und dargestellt, das bei der Flächenbearbeitung von Holz oder dgl. eingesetzt werden soll, um beispielsweise die mechanischen Bearbeitungswerkzeuge einzustellen. Hierzu hat es zwei Abstützfüße, deren Unterseiten die Anlageebene bilden. In der Mitte zwischen den beiden Abstützfüßen befindet sich ein Tastbolzen, der entgegen einer Federwirkung axial verschiebbar ist. Dabei betätigt der Tastbolzen das Anzeigeinstrument, das über ein Zahngetriebe mit dem Tastbolzen verbunden ist.

Dieses Meßgerät kann nur dann eingesetzt werden, wenn die beiden Abstützfüße auf ein und derselben Ebene zur Anlage kommen können. In vielen Anwendungsfällen ist dies jedoch nicht möglich, beispielsweise bei Holzfräsmaschinen, bei denen in aller Regel ein Anschlag mit einer festen Anschlaghälfte und einer verstellbaren Anschlaghälfte vorgesehen sind. In der Praxis wird dann die Bedienungsperson beim Einstellen des Fräswerkzeuges auf Probefräsungen zurückgreifen müssen, was nicht nur deshalb nachteilig ist, weil damit Zeit- und Materialverluste verbunden sind, sondern auch die Gefahr von Verletzungen besteht, denn die Bedienungsperson wird bei Probefräsungen aus Zeitgründen Schutzvorrichtungen oder Abdeckungen nicht anbringen.

Die GB-A 2 066 471 zeigt und beschreibt eine Höhenmeßeinrichtung mit einer Grundplatte, die zwei parallele Führungsstangen trägt, auf denen ein Meßwerk mit einer Digitalanzeige vertikal verschiebbar gelagert ist. Von dem Meßwerk steht ein horizontaler Finger ab, mit dem die Höhe von Gegenständen gemessen werden kann, die zu diesem Zweck verhältnismäßig nahe an die Meßeinrichtung herangeführt werden müssen. Die Meßeinrichtung kann nur in stehender Position eingesetzt werden.

Der Erfindung liegt die Aufgabe zugrunde, ein möglichst umfassend verwendbares Längenmeßgerät zur Verfügung zu stellen, das auch in Fällen ohne durchgehende Anlageebene eine stabile Lage einnimmt und auch Messungen in liegender Stellung erlaubt.

Gemäß der Erfindung wird diese Aufgabe dadurch gelöst, daß der Abstützfuß eine rechtwinklig zu seiner Anlageebene verlaufende Auflagefläche hat und daß das Lagergehäuse eine Auflagefläche hat, die in der Ebene der Auflagefläche des Abstützfußes liegt.

Ein derartiges Gerät gewährleistet auch bei größeren Abmessungen eine definierte Auflage. Aufgrund der beiden in einer Ebene liegenden Auflageflächen am Lagergehäuse und am Abstützfuß läßt es sich sicher und reproduzierbar in liegender Stellung einsetzen, beispielsweise auf einen Maschinentisch. Ein Anwendungsbeispiel sind Holzfräsmaschinen mit einer festen und einer verstellbaren Anschlaghälfte, zwischen denen das einzustellende Fräswerkzeug liegt. Zur Einstellung des Fräswerkzeuges kann das Gerät gemäß der Erfindung mit seinen beiden Auflageflächen plan auf den Maschinentisch gelegt werden, wobei die Anlageebene an der Unterseite des Abstützfußes gegen die verschiebbare Anschlaghälfte gedrückt wird. In dieser definierten Stellung des Gerätes kann in waagrechter Richtung der Abstand zum Fräswerkzeug gemessen werden, um dieses danach einzustellen.

Zur universellen Verwendbarkeit des Gerätes dient das Merkmal, daß der Abstützfuß einen rechtwinklig zum Tastbolzen und unter diesen verschiebbaren Auflageteller trägt. Dabei ist es günstig, wenn der Auflageteller am Ende einer Tragschiene befestigt ist, die zusammen mit dem Auflageteller in den Abstützfuß einschiebbar ist.

Mit dieser Weiterentwicklung läßt sich das Meßgerät auch zum Messen von Dicken, Wandstärken oder dgl. verwenden. Wenn es dann anschließend beispielsweise wieder zum Einstellen eines Bearbeitungswerkzeuges dienen soll, braucht nur der Auflageteller mit seiner Tragschiene in den Abstützfuß eingeschoben zu werden, so daß er nicht störend im Wege ist.

Es ist vorteilhaft, wenn der Abstützfuß an seiner Unterseite magnetische Haltemittel aufweist. Diese halten das Meßgerät auf einer metallischen Auflageebene, beispielsweise einem Maschinentisch, in einer definierten Stellung, so daß es trotz fehlenden, zweiten Abstützfußes sicher steht und nicht kippen kann.

Für eine standsichere Auflage ist es ferner von Vorteil, wenn in die Unterseite des Abstützfußes wenigstens eine Auskehlung eingearbeitet ist. Damit ist die Anlageebene des Abstützfußes flächenmäßig begrenzt, wodurch Unebenheiten auf der Auflageebene, etwa Schmutzteilchen oder Späne auf einem Maschinentisch, die Meßgenauigkeit so wenig wie möglich beeinträchtigen.

Nach einem weiteren Merkmal der Erfindung ist vorgesehen, daß das Lagergehäuse an seiner von der Anlageebene wegweisenden Oberseite als zur Anlageebene parallele, ebene Anlagefläche ausgebildet ist und daß aus dieser Oberseite das freie Ende des Tastbolzens herausragt. Auf diese Weise kann das Gerät auch für Tiefenmessungen verwendet werden.

In Weiterbildung der Erfindung trägt das Lagergehäuse eine Taststange, die parallel zu dem Tastbolzen verläuft. Dabei kann die Taststange im Lagergehäuse ausschwenkbar gelagert sein.

Bei dieser Weiterbildung der Erfindung läßt sich das Gerät auch zum Tiefenmessen von Bohrungen einsetzen, in die der Tastbolzen nicht mehr eingeführt werden kann. Statt dessen wird die Taststange bis zum Bohrungsgrund eingeschoben und die Bohrungstiefe über den Tastbolzen gemessen.

Nach einem weiteren Merkmal der Erfindung trägt der Tastbolzen an seinem zur Anlageebene weisenden Ende eine Meßanschlagscheibe, von der ein Meßfortsatz mit zur Anlageebene weisender Meßspitze absteht. Mit Hilfe dieser Meßspitze können Hohlkehlen oder dgl. gemessen werden. Der Meßfortsatz kann dabei im Querschnitt die Form eines mehr oder weniger spitzwinkligen Dreiecks haben.

Weitere Merkmale der Erfindung ergeben sich aus den übrigen abhängigen Ansprüchen. Anhand der folgenden Beschreibung eines Ausführungsbeispiels, das in der Zeichnung dargestellt ist, wird die Erfindung erläutert.

Es zeigen:

Figur 1 eine Seitenansicht eines Längenmeßgerätes,
Figur 2 die Unteransicht des Meßgerätes,
Figur 3 die rückwärtige Seitenansicht des Meßgerätes,
Figur 4 eine ausschnittsweise Darstellung des oberen Endes des den Tastbolzen tragenden Lagergehäuses mit ausgeschwenkter Taststange und
Figur 5 eine perspektivische Darstellung des unteren Endes des Tastbolzens mit daran angebrachter Meßanschlagscheibe.

Das in den Figuren dargestellte Gerät zum Messen von Längen hat ein Gehäuse 10 mit einem Abstützfuß 12 und einem Lagergehäuse 14, das einen darin längsverschieblich gelagerten Tastbolzen 16 trägt. Der Abstützfuß 12 und das Lagergehäuse 14 sind in ihrer Längserstreckung rechtwinklig zueinander angeordnet und durch eine schräg verlaufende, gerade Griffleiste 18 miteinander verbunden. Selbstverständlich kann die Griffleiste auch eine andere Form haben.

Die Unterseite des Abstützfußes 12 bildet eine Anlageebene 20, mit der das Meßgerät auf eine Bezugsfläche 22, beispielsweise einen Maschinentisch, aufgesetzt werden kann. Zur Erhöhung der Standfestigkeit sind in die Unterseite des Abstützfußes 12 Haltemagnete 24 eingesetzt, die das Gehäuse 10 auf einer metallischen Bezugsfläche 22 sicher halten, ohne daß ein Kippen zu befürchten ist. Ferner ist in die Unterseite des Abstützfußes 12 eine Auskehlung 26 eingearbeitet, die sich in Längsrichtung des Abstützfußes 12 erstreckt und die Fläche der Anlageebene 20 des Abstützfußes 12 so klein wie möglich macht; auf diese Weise werden störende Einflüsse von Unebenheiten, Schmutzteilchen oder dgl. so gering wie möglich gehalten.

In das Lagergehäuse 14 ist ein elektronischer Längenmesser mit einem digitalen Anzeigeinstrument 28 eingebaut, das die Verschiebebewegungen des als flache Leiste ausgebildeten Tastbolzens 16 anzeigt. Durch eine Drucktaste 30 kann die Anzeige des Anzeigeinstrumentes 28 in jeder Stellung des Tastbolzens 16 auf Null zurückgestellt werden, wobei durch eine weitere Drucktaste 30' eine metrische Anzeige oder eine Zollanzeige gewählt werden kann.

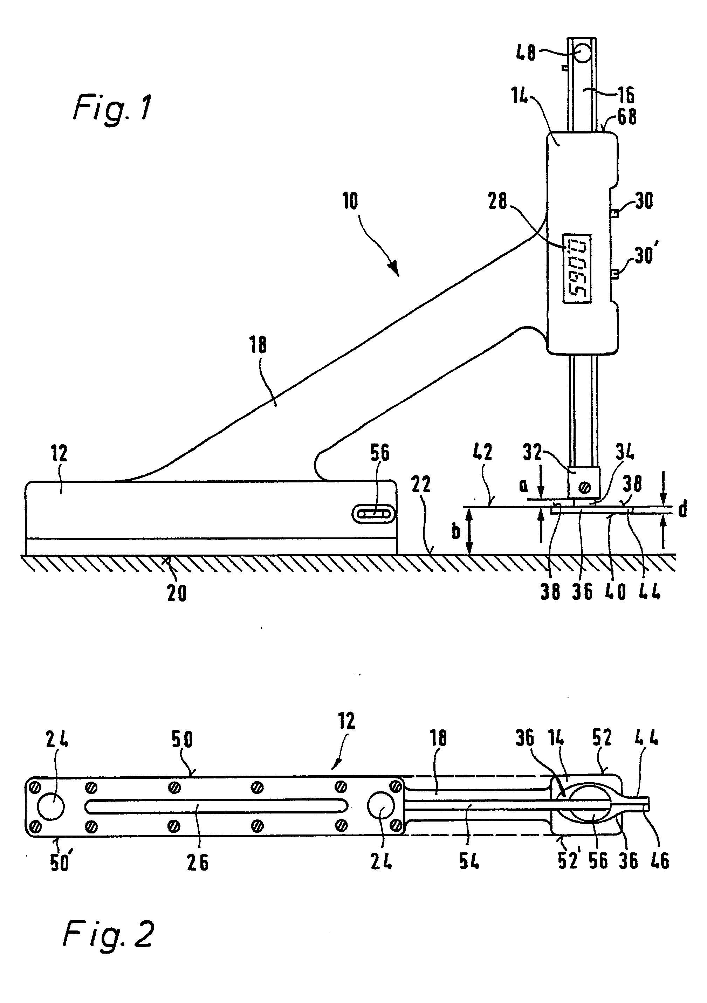

Am unteren, zur Anlageebene 20 und damit zur Bezugsfläche 22 weisenden Ende des Tastbolzens 16 ist ein zylindrischer Lagerkörper 32 befestigt, in dem ein Tragbolzen 34 in Verschieberichtung des Tastbolzens 16 beweglich gelagert ist. Am freien Ende des Tragbolzens 34 ist eine Meßanschlagscheibe 36 befestigt, deren Dicke in Figur 1 mit d angegeben ist. Das Axialspiel a, mit dem der Tragbolzen 34 im Lagerkörper 32 beweglich ist, entspricht genau dieser Dicke d der Meßanschlagscheibe 36, so daß sowohl deren Oberseite 38 als auch deren Unterseite 40 als Bezugsebene 42 zum Messen eines Abstandes b dienen kann.

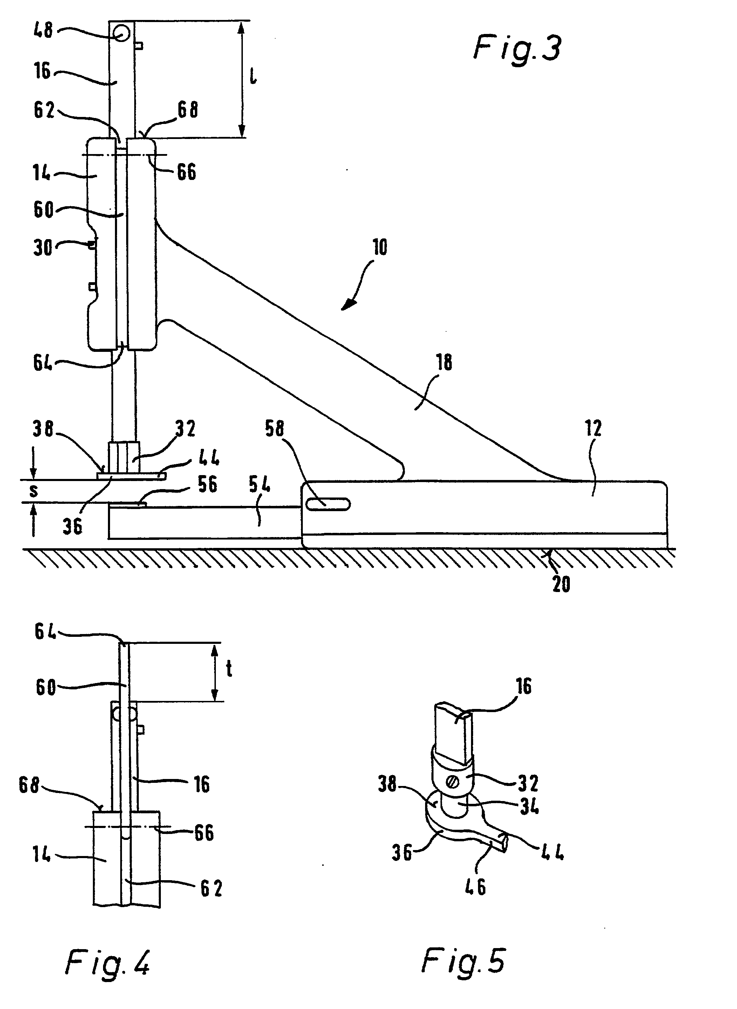

Wie insbesondere aus Figur 5 hervorgeht, steht von der Meßanschlagscheibe 36 ein länglicher Meßfortsatz 44 ab, der im Querschnitt die Form eines Dreiecks mit zur Anlageebene 20 weisender Meßspitze 46 hat. Die Meßspitze 46 liegt dabei in der Ebene der Unterseite 40 der Meßanschlagscheibe 36, während die Oberseite 38 der Meßanschlagscheibe 36 stufenlos in die Oberseite des Meßfortsatzes 44 übergeht. Mit Hilfe dieses Meßfortsatzes 44 lassen sich Werkzeugprofile, Auskehlungen, Gewindetiefen oder dgl. messen, in die die Meßanschlagscheibe 36 nicht eingeführt werden kann.

Der die Meßanschlagscheibe 36 und deren Meßfortsatz 44 tragende Tragbolzen 34 ist frei drehbar im Lagerkörper 32 gehalten, so daß der Meßfortsatz 44 in jede beliebige Richtung gedreht werden kann.

Der Tastbolzen 16 hat an seinem oberen, von der Anlageebene 20 wegweisenden Ende auf beiden Seiten eine runde Griffausnehmung 48, so daß er leicht zwischen zwei Fingern gefaßt und verschoben werden kann.

Wie insbesondere die Figur 2 zeigt, sind sowohl der Abstützfuß 12 als auch das Lagergehäuse 14 etwa quaderförmig ausgebildet, wobei der Abstützfuß 12 auf beiden Seiten je eine rechtwinklig zur Anlageebene 20 verlaufende, ebene Auflagefläche 50 hat. Auch das Lagergehäuse 14 hat zwei solche Auflageflächen 52, die in der jeweiligen Ebene der zugehörigen Auflagefläche 50 des Abstützfußes 12 liegen. Auf diese Weise kann man das Meßgerät in einer definierten Stellung auch auf eine Bezugsfläche, beispielsweise einen Maschinentisch, legen, um dann mit Hilfe des Tastbolzens 16 den Abstand b zu einer rechtwinklig auf dieser Bezugsfläche stehenden Fläche zu messen.

Im Abstützfuß 12 ist eine Tragschiene 54 in Richtung der Längserstreckung des Abstützfußes 12 verschiebbar gelagert, die an ihrem freien Ende auf der der Meßanschlagscheibe 36 zugekehrten Seite einen Auflageteller 56 trägt. Die Tragschiene 54 kann so weit aus dem Abstützfuß 12 herausgezogen werden, daß sich der Auflageteller 56 unter der Meßanschlagscheibe 36 befindet. Diese Stellung ist in den Figuren 2 und 3 dargestellt. Figur 3 zeigt, daß dann mit dem Meßgerät ein Dickenmaß s, beispielsweise eine Wandstärke oder ein Durchmesser, gemessen werden kann. Nach Abschluß dieser Messung wird die Tragschiene 54 wieder in den Abstützfuß 12 zurückgeschoben, bis auch der Auflageteller 56 im Abstützfuß 12 versenkt ist. Um ein Herausziehen des Auflagetellers 56 aus dem Abstützfuß 12 zu erleichtern, hat dieser an beiden Seiten je eine Griffausnehmung 58, durch die hindurch der Auflageteller 56 erfaßt werden kann.

Aus der Oberseite des Lagergehäuses 14, die von der Anlageebene 20 wegweist, ragt das freie Ende des Tastbolzens 16 heraus. Diese Oberseite ist als ebene Anlagefläche 68 ausgebildet, die parallel zur Anlageebene 20 verläuft. Damit können mit Hilfe des freien Endes des Tastbolzens 16 Tiefenmaße I ermittelt werden, wobei die Anlagefläche 68 die feste Bezugsebene ist.

Die Figuren 3 und 4 zeigen, daß das Lagergehäuse 14 eine Taststange 60 trägt, die parallel zu dem Tastbolzen 16 verläuft und in ihrer Ruhestellung gemäß Figur 3 in einem Schlitz 62 des Lagergehäuses 14 versenkt ist, so daß sie weder über die Anlagefläche 68 noch über die benachbarte Auflagefläche 52 hervorsteht. Um die Taststange 60 in ihre Meßstellung zu bringen, kann sie an ihrem unteren Ende 64 erfaßt und mit ihrem oberen Ende um eine parallel zur Anlageebene 20 verlaufende Achse 66 geschwenkt werden, bis sie in ihrer ausgeschwenkten Endstellung gemäß Figur 4 wieder parallel zum Tastbolzen 16 verläuft. In dieser Stellung läßt sich das Meßgerät zum Messen der Tiefe t einer Bohrung verwenden. Hierzu wird das freie Ende 64 der Taststange 60 bis in den Bohrungsgrund eingeschoben, worauf mit Hilfe des Tastbolzens 16 das Tiefenmaß t ermittelt werden kann.

**Patentansprüche**

1. Gerät zum Messen von Längen mit einem Abstützfuß, von dem eine schräge Griffleiste absteht, die ein Lagergehäuse für einen Tastbolzen trägt, der rechtwinklig zu einer an der Unterseite des Abstützfußes ausgebildeten Anlageebene verschiebbar und mit einem Anzeigeinstrument verbunden ist, dadurch gekennzeichnet, daß der Abstützfuß (12) eine rechtwinklig zu seiner Anlageebene (20) verlaufende Auflagefläche (50) hat und daß das Lagergehäuse (14) eine Auflagefläche (52) hat, die in der Ebene der Auflagefläche (50) des Abstützfußes (12) liegt.

2. Gerät nach Anspruch 1, dadurch gekennzeichnet, daß der Abstützfuß (12) einen rechtwinklig zum Tastbolzen (16) und unter diesen verschiebbaren Auflageteller (56) trägt.

3. Gerät nach Anspruch 2, dadurch gekennzeichnet, daß der Auflageteller (56) am Ende einer Tragschiene (54) befestigt ist, die zusammen mit dem Auflageteller (56) in den Abstützfuß (12) einschiebbar ist.

4. Gerät nach einem der vorhergehenden Ansprüche, dadurch gekennzeichnet, daß der Abstützfuß (12) an seiner Unterseite magnetische Haltemittel (24) aufweist.

5. Gerät nach einem der vorhergehenden Ansprüche, dadurch gekennzeichnet, daß in die Unterseite des Abstützfußes (12) wenigstens eine Auskehlung (26) eingearbeitet ist.

6. Gerät nach einem der vorhergehenden Ansprüche, dadurch gekennzeichnet, daß das Lagergehäuse (14) an seiner von der Anlageebene (20) wegweisenden Oberseite als zur Anlageebene (20) parallele, ebene Anlagefläche (68) ausgebildet ist und daß aus dieser Oberseite das freie Ende des Tastbolzens (16) herausragt.

7. Gerät nach einem der vorhergehenden Ansprüche, dadurch gekennzeichnet, daß das Lagergehäuse (14) eine Taststange (60) trägt, die parallel zu dem Tastbolzen (16) veläuft.

8. Gerät nach Anspruch 7, dadurch gekennzeichnet, daß die Taststange (60) im Schiebelager (14) ausschwenkbar gelagert ist.

9. Gerät nach einem der vorhergehenden Ansprüche, dadurch gekennzeichnet, daß der Tastbolzen (16) an seinem zur Anlageebene (20) weisenden Ende eine Meßanschlagscheibe (36) trägt, von der ein Meßfortsatz (44) mit zur Anlageebene (20) weisender Meßspitze (46) absteht.

10. Gerät nach Anspruch 9, dadurch gekennzeichnet, daß die Meßanschlagscheibe (36) in an sich bekannter Weise mit einem Axialspiel (a) im Tastbolzen (16) gelagert ist, das der Dicke (d) der Meßanschlagscheibe (36) entspricht.

11. Gerät nach einem der vorhergehenden Ansprüche, dadurch gekennzeichnet, daß der Tastbolzen (16) an seinem von der Anlageebene (20) abgekehrten Ende eine Griffausnehmung (48) hat.

12. Gerät nach einem der vorhergehenden Ansprüche, dadurch gekennzeichnet, daß das Anzeigeinstrument (28) mit dem daran verschiebbar gelagerten Tastbolzen (16) als elektronischer Meßschieber mit Digitalanzeige ausgebildet ist.

**Claims**

1. Apparatus for measuring lengths, comprising a support foot which has an obliquely extending grasping strap to which a housing is fixed bearing a sensor pin, said sensor pin being connected to an indicating instrument and being displaceable perpendicularly to a contact plane formed by the bottom side of said support foot, characterized in that said support foot (12) has a flat contact surface (50) which extends at right angles to said contact plane (20) of the support foot (12) and that the housing (14) has a flat contact surface (52) which lies in the plane of the contact surface (50) of the support foot (12).

2. Apparatus according to claim 1, wherein the support foot (12) bears a contact plate (56) which is displaceable at right angles to the sensor pin (16) and beneath it.

3. Apparatus according to claim 2, wherein the contact plate (56) is fastened at the end of a support rail (54) which is insertable together with the contact plate (56) into the support foot (12).

4. Apparatus according to anyone of the preceding claims, wherein the support foot (12) has magnetic holding means (24) on its bottom.

5. Apparatus according to anyone of the preceding claims, wherein at least one recess (26) is provided in the bottom of the support foot (12).

6. Apparatus according to anyone of the preceding claims, wherein the housing (14) has on its top side facing away from the contact plane (20), a flat contact surface (68) which is parallel to the contact plane (20), and wherein the free end of the sensor pin (16) extends from said top side.

7. Apparatus according to anyone of the preceding claims, wherein the housing (14) bears a sensor rod (60) which extends parallel to the sensor pin (16).

8. Apparatus according to claim 7, wherein the sensor rod (60) is mounted within the housing (14) in such a manner that it can be swung out.

9. Apparatus according to anyone of the preceding claims, wherein the sensor pin (16) bears at its end facing the contact plane (20) a measurement stop disk (36) from which a measurement extension (44) housing a measurement tip (46) pointing towards the contact plane (20) protrudes.

10. Apparatus according to claim 9, wherein the measurement stop disk (36) is mounted to the sensor pin (16) with an axial play (a) which corresponds to the thickness (b) of the measurement stop disk (36).

11. Apparatus according to anyone of the preceding claims, wherein the sensor pin (16) has a grasping recess (48) on the end thereof facing away from the contact plane (20).

12. Apparatus according to anyone of the preceding claims, wherein the indicating instrument (28) together with the sensor pin (16) mounted displaceably on it are developed as an electronic measurement slide with digital reading.

**Revendications**

1. Appareil de mesure des longueurs, comportant un pied de soutien, à partir duquel s'étend une poignée inclinée qui porte un boîtier logeant une tige palpeuse déplaçable perpendiculairement à un plan d'appui défini par la face inférieure du pied de soutien, et reliée à un instrument indicateur, caractérisé en ce que le pied de soutien (12) présente une face d'appui (50) s'étendant perpendiculairement à son plan d'appui (20) et en ce que le boîtier (14) présente une face d'appui (52) située dans le plan de la face d'appui (50) du pied de soutien (12).

2. Appareil selon la revendication 1, caractérisé en ce que le pied de soutien (12) porte un plateau d'appui situé perpendiculairement à la tige palpeuse (16) et déplaçable au-dessous cette dernière.

3. Appareil selon la revendication 2, caractérisé en ce que le plateau d'appui (56) est fixé à l'extrémité d'une coulisse de support (54) escamotable avec le plateau d'appui (56) dans le pied d'appui (12).

4. Appareil selon l'une des revendications précédentes, caractérisé en ce que le pied de soutien (12) présente sur sa face inférieure des moyens de maintien magnétiques (24).

5. Appareil selon l'une des revendications précédentes, caractérisé en ce qu'au moins une gorge (26) est usinée dans la face inférieure du pied de soutien (12).

6. Appareil selon l'une des revendications précédentes, caractérisé en ce que le boîtier (14) présente sur sa face supérieure éloignée du plan d'appui (20) une face d'appui plane (68), parallèle au plan d'appui (20), et en ce que l'extrémité de la tige palpeuse (16) dépasse de cette face supérieure.

7. Appareil selon l'une des revendications précédentes, caractérisé en ce que le boîtier (14) porte une barre palpeuse (60) parallèle à la tige palpeuse (16).

8. Appareil selon la revendication 7, caractérisé en ce que la barre palpeuse (60) est susceptible de sortir du boîtier (14) par un mouvement de pivotement.

9. Appareil selon l'une des revendications précédentes, caractérisé en ce que la tige palpeuse (16) porte à son extrémité tournée vers le plan d'appui (20) un disque de butée de mesure (36) à partir duquel s'étend un tenon de mesure (44) présentant une pointe de mesure (46) tournée vers le plan d'appui (20).

10. Appareil selon la revendication 9, caractérisé en ce que le disque de butée de mesure (36) est monté de manière connue en soi dans la tige palpeuse (16), avec un jeu axial (a) qui correspond à l'épaisseur (d) du disque de butée de mesure (36).

11. Appareil selon l'une des revendications précédentes, caractérisé en ce que la tige palpeuse (16) présente un évidement de préhension (48) à son extrémité opposée au plan d'appui (20).

12. Appareil selon l'une des revendications précédentes, caractérisé en ce que l'instrument indicateur (28) associé à la tige palpeuse (16) mobile est réalisé sous la forme d'un curseur de mesure électronique à affichage numérique.

Fig. 1

Fig. 2

*Fig.3*

*Fig.4*

*Fig.5*